(19) Europäisches Patentamt
European Patent Office
Office européen des brevets

(11) Publication number: 0 477 757 A2

# (12) EUROPEAN PATENT APPLICATION

(21) Application number: **91115840.0**

(22) Date of filing: **18.09.91**

(51) Int. Cl.[5]: **C08L 81/06**, C08L 77/06, C08L 71/08

(30) Priority: **20.09.90 US 585729**

(43) Date of publication of application: **01.04.92 Bulletin 92/14**

(84) Designated Contracting States: **BE DE FR GB IT NL**

(71) Applicant: **AMOCO CORPORATION**
**200 East Randolph Drive**
**Chicago Illinois 60601(US)**

(72) Inventor: **Bapat, Pradeep Madhao**
**570 Estate Club Circle**
**Roswell, GA 30075(US)**
Inventor: **Harris, James Elmer**
**6602 Garrett Road**
**Buford Georgia 30518(US)**
Inventor: **Chen, Yu-Tsai**
**22 W 401 McCarron Road**
**Glen Ellyn, IL 60137(US)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

## (54) Polyamide-Poly(aryl ether sulfone)blends.

(57) Described are blends of polyamides comprising at least 50 weight percent of hexamethylene terephthalamide repeat units and poly(aryl ether sulfones), which blends exhibit surprising increases in tensile strength and a desirable combination of other properties.

EP 0 477 757 A2

This invention relates to blends of aliphatic-aromatic polyamides, wherein at least 50 weight percent of the repeat units are 1,6-hexamethylene terephthalamide units, with poly(aryl ether sulfones). Surprisingly, these blends show better mechanical properties than expected. In addition, the novel materials of this invention display an excellent overall combination of thermal and fabrication properties and superior chemical and stress-crack resistance.

Poly(aryl ethers) are tough, rigid, high strength thermoplastics which maintain their properties over a wide temperature range of from -150°F to about 300°F. They have a high continuous use temperature of about 300°F. They are hydrolytically stable and have excellent mechanical and electrical properties which allow them to be molded into a variety of articles.

Poly(aryl ethers) (hereinafter referred to as "PAE's") presenting great practical interest are those that contain the sulfone group. Thus, poly(aryl ether sulfones) having repeating units of formulae (1) and (2):

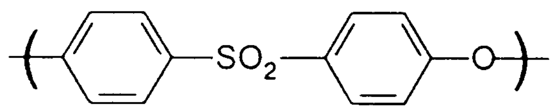

(1)

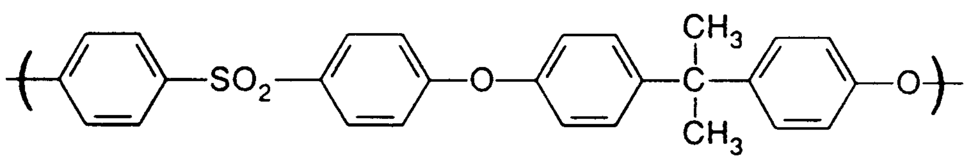

(2)

are commercially available, tough thermoplastic materials. They possess a number of attractive features such as excellent high temperature resistance, good electrical properties, and very good hydrolytic stability. An example of polymer (1) is that available from Imperial Chemical Industries, Ltd. under the trademark of VICTREX® Poly(ether sulfone). Such polymers can be produced by the polycondensation of 4,4'-dihydroxydiphenyl sulfone with 4,4'-dichlorodiphenyl sulfone as described in, for example, Canadian Patent No. 847,963. The resin contains no aliphatic moieties and has a heat deflection temperature ("HDT") of about 205°C. Material (2) is available from Amoco Performance Products, Inc., under the trademark of UDEL® Polysulfone. It has a heat deflection temperature of about 180°C, and can be made via the nucleophilic polycondensation of bisphenol-A di-sodium salt with 4,4'-dichlorodiphenyl sulfone, as described in U.S. Patent No. 4,108,837 or by the alkali metal carbonate route described in Canadian Patent No. 847,963.

Poly(aryl ethers) are highly resistant to mineral acids and salt solutions. However, improvements in solvent resistance and environmental stress-aging characteristics would be desirable. Several approaches have been made in an effort to improve these materials and, thereby, improve the utility of the poly(aryl ether) resins in end-use applications which require relatively good solvent resistance properties and good environmental stress-aging characteristics. One approach which has provided some improvement in the environmental stress-aging characteristics of the poly(aryl ether sulfone) resin is cross-linking of the polymer. This procedure, however, results in compositions that are difficult to process. Blending such resins with other resins has also provided some improvement in environmental stress-aging characteristics. Blends of poly(ethylene terephthalate) with poly(aryl ether sulfones), for example, exhibit relatively good stress-crack resistance properties above about 30 weight percent of the poly(ethylene terephthalate).

Polyamides are generally known to exhibit a desirable combination of strength, stiffness and thermal properties. Unmodified polyamides are widely used in applications requiring those characteristics where low or moderate loads will be encountered and particularly where exposure to extreme temperatures is not likely. Toughened versions of polyamides have found increasing use in automotive applications such as trim parts, and reinforcement of polyamides with glass and glass/mineral combinations has extended their acceptance for such diverse applications as fan blades, valve covers, bicycle wheels and the like. However, for applications that require retention of mechanical properties for long periods of use at elevated temperatures, these compositions often are considered unsatisfactory. Additionally, even though glass and mineral fillers serve to increase rigidity and reduce the shrinkage tendencies of polyamide resins, it is well

known that filled compositions exhibit reduced ductility and toughness. Filled compositions also may have poor melt flow characteristics which in turn increase the difficulty of molding such compositions. Also, polyamides, in particular the all-aliphatic polyamides, have low heat deflection temperatures and show undesirably high water absorption.

Crystalline polyphthalamides comprising at least 50 weight percent hexamethylene terephthalamide units often show higher HDT and lower water absorption, together with improved retention of mechanical properties when wet. Melting points of such polyphthalamides and, accordingly, temperature requirements for melt processing thereof, typically exceed those of the wholly aliphatic polyamides. Examples of polyamide compositions comprising at least 50 weight percent hexamethylene terephthalamide units are disclosed in commonly assigned U.S. 4,603,166 (polyphthalamides based on terephthalic, isophthalic and adipic acids or terephthalic and adipic acids); U.S. 4,607,073 (polyamides based on 60-77 or 60 to 100 mole percent terephthalic acid, 23-40 or 0 to 40 mole percent of another aromatic dicarboxylic acid and hexamethylene diamine); commonly assigned U.S. 4,476,280 (polyphthalamides based on terephthalic acid, isophthalic acid and adipic acid and 55-95 mole percent hexamethylene diamine and 5-45 mole percent trimethylhexamethylene diamine); commonly assigned U.S. 4,617,342 (polyphthalamides based on 80-99 mole percent terephthalic acid, 1-20 mole percent isophthalic acid and 60-98 mole percent hexamethylene diamine and 2-40 mole percent trimethylhexamethylene diamine); commonly assigned U.S. 4,495,328 (polyphthalamides based on terephthalic acid, 55-95 mole percent hexamethylene diamine and 5-45 mole percent trimethylhexamethylene diamine); and commonly assigned U.S. 4,863,991 (polyphthalamide compositions based on 70-99 mole percent terephthalic acid, 1-30 mole percent isophthalic acid and hexamethylene diamine).

One method for improving the properties of thermoplastic polyamide compositions has been to blend polyamides with dissimilar resins. However, aliphatic and aromatic polyamides are highly polar materials. They are generally incompatible or at best only poorly compatible with a great many other resins, and particularly so with much less polar resins such as polyolefins, styrenic resins, phenylene ether resins and the like. Blends of polyamides with such resins often exhibit phase segregation in the melt and poor interphase adhesion, which result in delamination, lower ductility and generally poor mechanical properties in extruded or injection molded parts.

Blends of poly(aryl ether sulfones) with polyamides are described in U.S. 3,729,527. Disclosed polyamides include nylon 66, 4, 6, 8, 11, 12, 69, 610, 61, MXD6, 612, and 1212. Copolyamides including hexamethylene adipamide/caprolactam, hexamethylene adipamide/hexamethylene isophthalamide, hexamethylene adipamide/hexamethylene terephthalamide, hexamethylene adipamide/hexamethylene azeleamide and hexamethylene adipamide/hexamethylene azeleamide/caprolactam also are disclosed.

Commonly assigned, published European Patent Application 85108029.1 of Harris et al., published February 5, 1986, discloses blends of crystalline and amorphous thermoplastic polymers having utility as a substrate or insulating material for electrical devices such as chip carriers. Disclosed amorphous polymers include poly(aryl ether sulfones), poly(arylethers), polyarylates and polyetherimides. Disclosed crystalline polymers include polyesters, poly(arylene sulfides) and polyamides. Disclosed polyamides include nylon 66, 6, 3, 4, 7, 8, 9, 10, 11, 6T and 610. As starting materials for preparation of polyamides, diacids, including carbonic, oxalic, glutaric, adipic, pimelic, suberic, azelaic, sebacic, dodecanedioic, isophthalic and terephthalic acid, and diamines, including hydrazine, ethylene diamine, hexamethylene diamine, 1,8-octamethylene diamine, piperazine, o-phenylene diamine, 2,4-diaminotoluene and 4,4'-methylene dianiline, are disclosed.

In an effort to improve compatibility of polyamides and poly(aryl ether sulfones), poly(aryl ether sulfones) containing acid groups (e.g., COOH or $SO_3H$) have been reported -- see German Patent Application No. 3,444,339. The introduction of the acid functionality is reported to have beneficial effect in yielding alloys with improved mechanical properties. However, a drawback of the approach is the necessity to use expensive, acid-containing monomers. In addition, poly(aryl ether sulfones) having pendant acid groups can be corrosive at the high temperatures required for their fabrication (350-400 °C) and the presence of such strong acid functions as the $SO_3H$ group can result in undesirable degradative side-reactions during melt processing. Example 1 teaches a blend containing an aliphatic-aromatic polyamide produced by reacting a mixture of isophthalic and terephthalic acids with 1,6-hexamethylene diamine. The processing temperature of 290 °C, however, suggests that the mole ratio of isophthalic acid to terephthalic acid is greater than 1:1.

Block copolymers of polyamides, derived from the polymerization of lactams (e.g., nylon-6), and poly(aryl ethers) are disclosed in U.S. 3,657,385. Blends of the block copolymers with either the corresponding poly(aryl ethers) or with the corresponding polyamides are reported to be mechanically compatible in U.S. 3,655,822; see also McGrath et al., American Chemical Society, Division of Polymer Chemistry, Preprints 14

(2), pp. 1032-1039 (1973). Although suitable materials are reported to have been obtained via this approach, the method has several drawbacks. First, it is necessary to prepare a block copolymer. Such copolymerizations are expensive because they must be performed under strictly controlled and anhydrous conditions. Second, the method is applicable only to those polyamides that are derived from a lactam, i.e. to nylons of the a-b type. It cannot be applied to the a-a + b-b type polymers made from a diamine and a dicarboxylic acid. There is no mention of aliphatic-aromatic polyamides comprising units derived from terephthalic acid and 1,6-hexamethylene diamine in the patent.

U.S. 4,798,855 discloses alloys of:

(a) 2 to 97.9 weight percent of a polyamide;
(b) 2 to 97.9 weight percent of a poly(aryl ether sulfone);
(c) 0.1 to 30 weight percent of a polymeric component having hydroxyl groups;
(d) 0 to 50 weight percent of an elastomeric impact modifier; and
(e) 0 to 60 weight percent of reinforcing fillers.

The subject materials are said to display good properties. The drawback is, of course, the necessity to use another resin, i.e. the hydroxyl-containing polymer, as an interfacial agent. This is relatively expensive and may lead to undesirable side-reactions (dehydration, crosslinking) at the high fabrication temperatures required for melt-processing of poly(aryl ether sulfones). Example 14 teaches a blend comprising an aliphatic-aromatic polyamide. The polyamide is again an amorphous polyamide produced by reacting 1,6-hexamethylene diamine with a mixture of isophthalic acid and terephthalic acid at a mole ratio of 60:40.

In summary, therefore, several attempts are reported for preparing blends of poly(aryl ether sulfones) with polyamides; however, the blends of the present invention are not disclosed. Further, the improvements shown by the invented compositions could not have been predicted from the patents and publications discussed above which generally resulted in blends that were brittle and of little practical utility unless impractical and costly additional components and processing steps were used.

It has now been unexpectedly discovered that semi-crystalline or crystalline aliphatic-aromatic polyamides which comprise at least 50 percent by weight recurring 1,6-hexamethylene terephthalamide units yield blends with poly(aryl ether sulfones) showing desirable mechanical properties without the need for compatibilizing agents or specially prepared blend components. The discovery is particularly surprising in view of the fact that the polar polyamides were expected to show little or no affinity at the molecular level to the much less polar poly(aryl ether sulfones).

The two constituents of the novel blends, i.e. the crystalline or semi-crystalline aliphatic-aromatic polyamide and the poly(aryl ether sulfone), can be present in any proportion. Preferred blends comprise from about 5 to about 95 parts by weight of the aliphatic-aromatic polyamide and from about 95 to about 5 parts by weight of the poly(aryl ether sulfone) because the same exhibit tensile strengths exceeding those predicted by the law of mixtures. Most preferred blends comprise from about 50 to about 85 parts by weight of the aliphatic-aromatic polyamide and from about 50 to about 15 parts by weight of the poly(aryl ether sulfone).

The blends may, optionally, also contain fillers, fibrous reinforcing agents and other additives and modifiers.

Advantageously, the materials of the instant invention also show excellent thermal properties, good interphase adhesion and a desirable combination of mechanical properties. In addition, little or no reduction in the elongation at break is observed in the invented compositions as compared to the polyamide component thereof.

## The Poly(aryl ether sulfones)

The poly(aryl ether sulfone) component of the invented compositions comprises repeat units of the general formula:

- O - E - O - E'-

wherein E is the residuum of dihydric phenol, and E' is the residuum of a benzenoid compound having a sulfone group in at least one of the positions ortho and para to the valence bonds, both of said residua being valently bonded to the ether oxygens through aromatic carbon atoms. Aromatic polyethers containing such units are described in, for example, U.S. 3,264,536 and 4,175,175. It is preferred that the dihydric phenol be a weakly acidic dinuclear phenol such as, for example, the dihydroxy diphenyl alkanes or the nuclear halogenated derivatives thereof, such as for example, 2,2-bis(4-hydroxyphenyl)propane, 1,1-bis(4-hydroxyphenyl)2-phenyl ethane, bis(4-hydroxyphenyl)methane,or their chlorinated derivatives containing one

or two chlorines on each aromatic ring. Also suitable as the dihydric phenol are various bisphenols with a symmetrical or unsymmetrical joining group, as for example, ether oxygen (- O -), sulfone

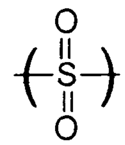

or a hydrocarbon residue in which the two phenolic nuclei are joined to the same or different carbon atoms of the residue.

The dinuclear phenols can be characterized as having the structure:

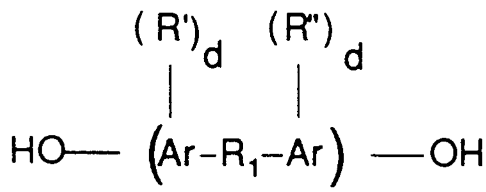

wherein Ar is an aromatic group and is preferably a phenylene group, R' and R'' can be the same or different inert substituent groups such as alkyl groups having from 1 to 4 carbon atoms, aryl, halogen atoms, i.e. fluorine, chlorine, bromine or iodine, or alkoxyl radicals having from 1 to 4 carbon atoms, each d is independently an integer having a value of from 0 to 4, inclusive, and $R_1$ is a bond between aromatic carbon atoms as in dihydroxydiphenyl, or is a divalent radical, including for example, radicals such as -O-, C=O, -S-, -S-S-, -SO-, $-SO_2-$, and divalent hydrocarbon radicals such as alkylene, alkylidene, cycloalkylene, cycloalkylidene, or the halogen, alkyl, aryl, or like-substituted alkylene, alkylidene or cycloaliphatic radicals as well as aromatic radicals and radicals fused to both Ar groups.

Examples of specific dihydric polynuclear phenols include among others the bis(hydroxyaryl) alkanes such as:

2,2-bis(4-hydroxyphenyl)propane,
2,4'-dihydroxydiphenylmethane,
bis(2-hydroxyphenyl)methane,
bis(4-hydroxyphenyl)methane,
bis(4-hydroxy-2,6-dimethyl-3-methoxyphenyl)methane,
1,1-bis(4-hydroxyphenyl)ethane,
1,2-bis(4-hydroxyphenyl)ethane,
1,1-bis(4-hydroxy-2-chlorophenyl)ethane,
1,1-bis(3-methyl-4-hydroxyphenyl)propane,
1,3-bis(3-methyl-4-hydroxyphenyl)propane,
2,2-bis(3-phenyl-4-hydroxyphenyl)propane,
2,2-bis(3-isopropyl-4-hydroxyphenyl)propane,
2,2-bis(2-isopropyl-4-hydroxyphenyl)propane,
2,2-bis(4-hydroxynaphthyl-1)propane,
2,2-bis(4-hydroxyphenyl)pentane,
3,3-bis(4-hydroxyphenyl)pentane,
2,2-bis(4-hydroxyphenyl)heptane,
bis(4-hydroxyphenyl)phenylmethane,
2,2-bis(4-hydroxyphenyl)-1-phenyl-propane, and
2,2-bis(4-hydroxyphenyl)1,1,1,3,3,3,-hexafluoropropane;

di(hydroxyaryl) sulfones such as

bis(4-hydroxyphenyl)sulfone,
2,4'-dihydroxydiphenyl sulfone,
5-chloro-2,4'-dihydroxydiphenyl sulfone, and
5-chloro-4,4'-dihydroxydiphenyl sulfone;

and di(hydroxyaryl) ethers such as
bis(4-hydroxyphenyl)ether,
the 4,3'-,4,2'-,2,2'-,2,3'-dihydroxydiphenyl ethers,
4,4'-dihydroxy-2,6-dimethyldiphenyl ether,
bis(4-hydroxy-3-isopropylphenyl)ether,
bis(4-hydroxy-3-chlorophenyl)ether,
bis(4-hydroxy-3-fluorophenyl)ether,
bis(4-hydroxy-3-bromophenyl)ether,
bis(4-hydroxynaphthyl-1)ether,
bis(4-hydroxy-3-chloronaphthyl-1)ether, and
4,4'-dihydroxy-3,6-dimethoxydiphenyl ether.
Other useful diphenols are, for example, dihydroxybenzophenones such as 4,4'-dihydroxybenzophenone, naphthalene diols and mononuclear diphenols such as hydroquinone or resorcinol. Dihydroxydiphenyls such as 4,4'-diphenol are also useful.

As herein used, the E term is defined as being the "residuum of the dihydric phenol" and, of course, refers to the residue of the dihydric phenol after the removal of the two hydroxyl groups. Thus, as is readily seen, these aryl ether units contain groups of the residuum of dihydric phenol and the residuum of the benzenoid compound bonded through aromatic ether oxygen atoms.

Any dihalobenzenoid or dinitrobenzenoid compound, or mixtures thereof, wherein the halo- or nitro-groups are bonded to aromatic ring carbon atoms, and wherein the aromatic rings have a sulfone group in at least one of the positions ortho or para to the halogen or nitro group, can be employed in preparation of the poly(aryl ether sulfone) component of the invented compositions. The dihalobenzenoid or dinitrobenzenoid compound can be either mononuclear, where the halogens or nitro groups are attached to the same benzenoid ring; or polynuclear, where they are attached to different benzenoid rings; as long as there is an activating sulfone group in the ortho or para position of that benzenoid nucleus. Fluorine- and chlorine-substituted benzenoid reactants are preferred; the fluorine compounds for fast reactivity, and the chlorine compounds for their inexpensiveness. Fluorine-substituted benzenoid compounds are most preferred, particularly when there is a trace of water present in the polymerization reaction system. However, water content should be maintained below about one percent and preferably below 0.5 percent for best results.

If desired, the polymers may be made with mixtures of two or more dihalobenzenoid or dinitrobenzenoid compounds. Thus, the E' residuum of the benzenoid compounds in the polymer structure may be the same or different.

It is seen also that as used herein, the E' term, defined as the "residuum of the benzenoid compound", refers to the aromatic or benzenoid residue of the compound after the removal of the halogen atom or nitro group on the benzenoid nucleus.

Preferred aryl ether units are those prepared using the dihydric polynuclear phenols of the formulae (3)-(8) including the derivatives thereof which are substituted with inert substituent groups;

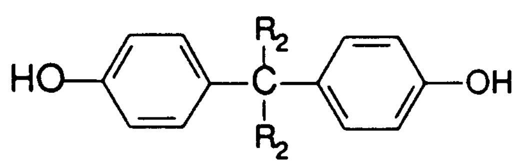

(3)

in which the $R_2$ groups represent independently hydrogen, lower alkyl, aryl or the halogen-substituted derivatives thereof;

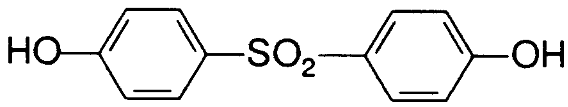

(4)

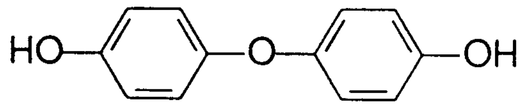

(5)

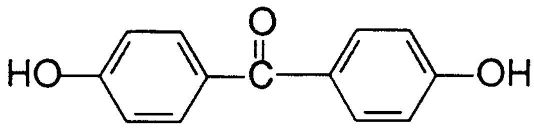

(6)

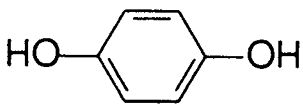

(7)

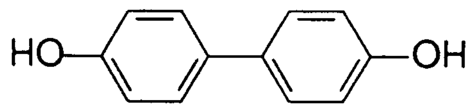

(8)

and substituted derivatives thereof.

It is also contemplated to use a mixture of two or more different dihydric phenols. Thus, when referred to above, the -E- residuum in the polymer structure can be the same or different aromatic residua.

The preferred dihalobenzenoid compounds are (9) and (10); they can carry inert substituent groups.

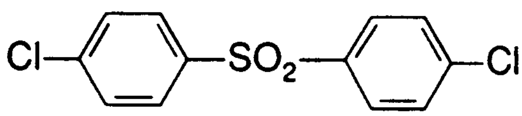

(9)

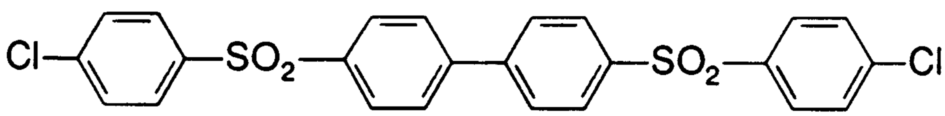

(10)

Most preferred poly(aryl ether sulfones) are those containing one or more units of the formulae (2), (2a), (11) and (12) shown below because of their availability and desirable properties.

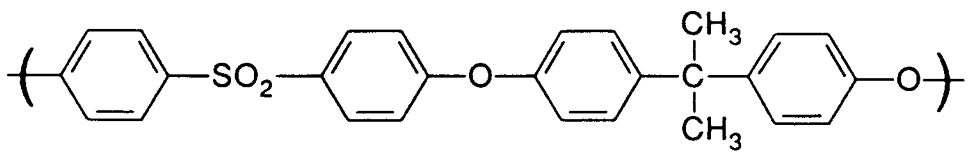

(2)

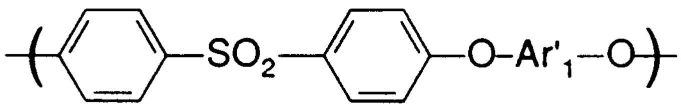

(2a)

where Ar'$_1$ is one or more of

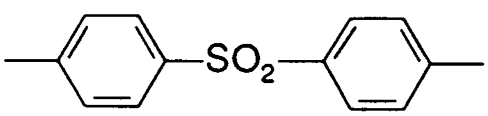

and

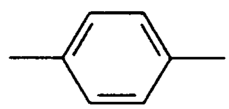

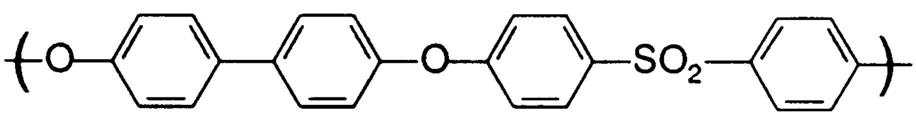

(11)

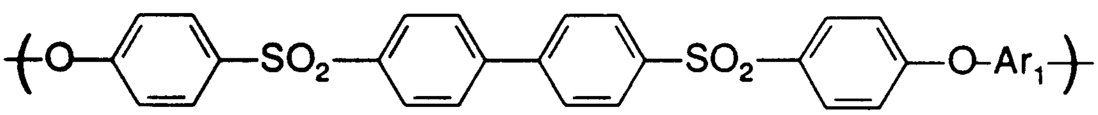

(12)

wherein $Ar_1$ is one or more of:

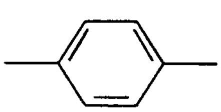

,

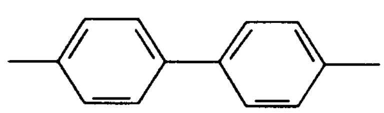

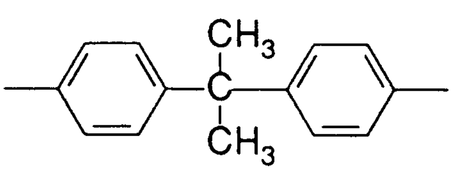

and

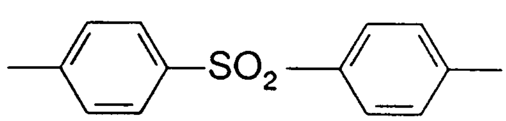

Preparation of the poly(aryl ether sulfones) can be accomplished by the carbonate method. In the carbonate method, the polymers are prepared by contacting substantially equimolar amounts of the hydroxy-containing compounds and the dihalo- or dinitrobenzenoid compounds, e.g., 4,4'-dichlorodiphenyl

sulfone or 4,4'-difluorodiphenyl sulfone, with from about 0.5 to about 1.0 mole of an alkali metal carbonate per mole of hydroxyl group in a solvent mixture comprising a solvent which forms an azeotrope with water in order to maintain the reaction medium at substantially anhydrous conditions during the polymerization.

The temperature of the reaction mixture is kept at about 170 ° C to about 250 ° C, preferably from about 210 ° C to about 235 ° C for about 1 to 15 hours. However, lower or higher temperatures may also be adequate.

In a modification which is particularly suitable for making copolymers from bisphenol A and one or more additional dihydroxy compounds, the reactants other than the additional dihydroxy compounds are charged and heated at from about 120 ° C to about 180 ° C for about 1 to about 5 hours, the additional dihydroxy compounds are added, the temperature is raised and the mixture is heated at about 200 ° C to about 250 ° C, preferably from about 210 ° C to about 240 ° C, for about 1 to about 10 hours. This modification is further described in U.S. 4,783,520 of Donald R. Kelsey et al., issued November 8, 1988, commonly assigned.

The reaction is carried out in an inert atmosphere, e.g., nitrogen, at atmospheric pressure, although higher or lower pressures may also be used.

The poly(aryl ether sulfone) is then recovered by conventional techniques such as coagulation, solvent evaporation, and the like.

The solvent mixture comprises a solvent which forms an azeotrope with water and a polar aprotic solvent. The solvent which forms an azeotrope with water includes an aromatic hydrocarbon such as benzene, toluene, xylene, ethylbenzene, chlorobenzene, and the like.

The polar aprotic solvents are those generally known in the art for the manufacture of poly(aryl ether sulfones) and include sulfur containing solvents such as those of the formula:

$$—R_3—S(O)_\delta—R_3$$

$—R_3—S(O)_\delta—R_3$ in which each $R_3$ represents a monovalent lower hydrocarbon group free of aliphatic unsaturation, which preferably contains fewer than about 8 carbon atoms or when connected together represents a divalent alkylene group with $\delta$ being 1 or 2. Thus, in all of these solvents, all oxygens and two carbon atoms are bonded to the sulfur atom. Contemplated for use are such solvents as those having the formula:

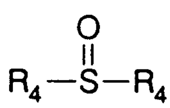

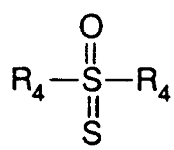

where the $R_4$ groups are independently lower alkyl, such as methyl, ethyl, propyl, butyl, and like groups, and aryl groups such as phenyl and alkylphenyl groups such as the tolyl group, as well as those where the $R_4$ groups are interconnected as in a divalent alkylene bridge such as:

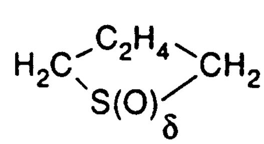

in tetrahydrothiophene oxides and dioxides. Specifically, these solvents include dimethylsulfoxide, dimethylsulfone, diphenylsulfone, diethylsulfoxide, diethylsulfone, diisopropylsulfone, tetrahydrothiophene 1,1-dioxide (commonly called tetramethylene sulfone or sulfolane) and tetrahydrothiophene-1 monoxide.

Additionally, nitrogen-containing solvents may be used. These include dimethylacetamide, dimethylformamide and N-methylpyrrolidone.

The azeotrope-forming solvent and polar aprotic solvent are used in a weight ratio of about 1:10 to about 1:1, preferably about 1:5 to about 1:3.

In the reaction, the hydroxy containing compound is slowly converted, in situ, to the alkali metal salt thereof by reacting with the alkali metal carbonate. The alkali metal carbonate is preferably potassium

carbonate. As indicated before, mixtures of carbonates such as potassium and sodium carbonate may also be used.

Water is continuously removed from the reaction mass as an azeotrope with the azeotrope-forming solvent so that substantially anhydrous conditions are maintained during the polymerization.

It is essential that the reaction medium be maintained substantially anhydrous during the polycondensation. While amounts of water up to about one percent can be tolerated, and are somewhat beneficial when employed with fluorinated dihalobenzenoid compounds, amounts of water substantially greater than this are desirably avoided as the reaction of water with the halo and/or nitro compound leads to formation of phenolic species and only low molecular weight products are obtained. Consequently, in order to prepare the high polymers, the system should be substantially anhydrous, and preferably contain less than 0.5 percent by weight water during the reaction.

While the carbonate method for preparing the poly(aryl ethers) is simple and convenient, the alkali metal hydroxide method also can be utilized. In the alkali metal hydroxide method, described by Johnson et al., U.S. 4,108,837 and 4,175,175, an alkali metal salt of a dihydric phenol is contacted with a dihalobenzenoid compound in the presence of a sulfur containing solvent as hereinabove defined under substantially anhydrous conditions. Additionally, the poly(aryl ether sulfones) can be prepared by other suitable methods.

The poly(aryl ether sulfones) have a reduced viscosity ("RV") of from about 0.30 to about 1.5 dl/g as measured in an appropriate solvent at an appropriate temperature depending on the particular polyether. Typical solvents are, for example, methylene chloride or chloroform in which the RV's are generally measured at 25 ° C. At reduced viscosities below about 0.30 dl/g the poly(aryl ether sulfones) become brittle and lead to blends with marginal properties. At reduced viscosities above about 1.5 dl/g the poly(aryl ether sulfones) display very high melt-viscosities and the resulting blends may be difficult to melt-fabricate.

## The Polyamides

The semi-crystalline aliphatic-aromatic polyamides useful for the purposes of the instant invention comprise at least 50 percent by weight of repeat units of formula (13):

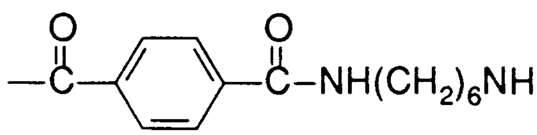

(13)

Such polyamides show good strength, low water absorption and melting points of at least about 270 ° C.

The remaining 0 to 50 percent by weight of the repeat units of the polyamide can be of the formulae (14) and/or (15)

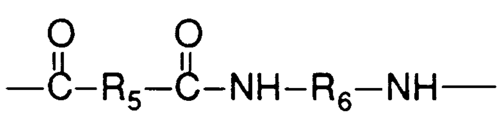

(14)

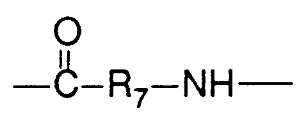

(15)

where $R_5$ and $R_6$ are independently $C_1$ to $C_{20}$ straight chain or branched alkylene, $C_4$ to $C_{18}$ cycloalkylene, $C_6$ to $C_{20}$ arylene, optionally substituted with $C_1$ to $C_4$ alkyl, $C_1$ to $C_4$ alkoxy or halogen; arylalkylene of 7 to 25 carbon atoms or heteroarylene of 4 to 20 carbon atoms, where the arylene and heteroarylene radicals are optionally substituted with $C_1$ to $C_4$ alkyl, $C_1$ to $C_4$ alkoxy or halogen; and $R_7$ is alkylene, cycloalkylene or arylalkylene as defined for $R_5$ and $R_6$. Preferably, $R_5$ is a $C_4$ to $C_{10}$ alkylene radical, $R_6$ is a $C_4$ to $C_{12}$ alkylene radical and $R_7$ is a $C_3$ to $C_{12}$ alkylene radical.

Examples of such repeat units include aliphatic units, e.g., hexamethylene adipamide, hexamethylene sebacamide, hexamethylene azeleamide, hexamethylene dodecamethylamide, hexamethylene cyclohexanedicarboxylamide, dodecamethylene adipamide, 2,2,4-trimethylhexamethyleneterephthalamide and units derived from lactams such as caprolactam; aromatic, e.g., m-xylylene isophthalamide, p-xylylene isophthalamide, oxybisphenylene isophthalamide; or aliphatic-aromatic, e.g., hexamethylene isophthalamide,

hexamethylene 2,6-naphthalene dicarboxylamide, m-xylylene adipamide, heptamethylene adipamide, dodecamethylene isopthalamide and m-phenylene adipamide. Preferred among such units are hexamethylene adipamide, hexamethylene isophthalamide and epsilon caprolactam units and combinations thereof.

Particularly preferred polyphthalamides according to this invention comprise from about 60 to about 85 weight percent recurring hexamethylene terephthalamide units, about 10 to about 40 weight percent recurring hexamethylene adipamide units and about 0 to about 30 weight percent hexamethylene isophthalamide units. Below about 60 weight percent hexamethylene terephthalamide content or above about 30 weight percent hexamethylene isophthalamide content, the polyphthalamides may exhibit low crystallinity or be sufficiently slow or difficult to crystallize that attainment of desirable thermal properties, such as HDT, is difficult. Above about 85 weight percent hexamethylene terephthalamide units, the resulting polyphthalamides and the invented compositions based thereon, and particularly those comprising fibrous or particulate reinforcements, can be difficult to melt process into fabricated parts due to the relatively close melting points and degradation temperatures of the polyphthalamide. A particularly preferred polyphthalamide for use according to this invention comprises recurring hexamethylene terephthalamide, isophthalamide and adipamide units in a weight ratio of about 60-70:15-30:10-25, as such polyphthalamides exhibit excellent thermal properties, strength and solvent resistance.

The polyphthalamide component of the invented compositions can be prepared from appropriate starting materials, e.g., a dicarboxylic acid component comprising terephthalic acid or a derivative thereof and a diamine component comprising at least one aliphatic diamine or derivative thereof, in suitable proportions by any suitable means. If desired, the acid component can comprise terephthalic acid compound and one or more additional dicarboxylic acids or derivatives thereof to provide copolyamides as described above. Similarly, mixtures of diamines can be used and lactams can be included in the starting materials if desired. An example of a suitable method for preparing the polyphthalamide component is disclosed in the aforementioned U.S. 4,603,166 and involves a salt preparation step, preferably conducted batchwise to achieve proper stoichiometry, wherein starting materials comprising dicarboxylic acid and diamine components and solvent are added to a suitable reaction vessel in appropriate amounts and maintained under conditions effective to cause salt formation but avoid appreciable conversion of salt to oligomers. Water is a preferred solvent and temperature is preferably maintained below about 120°C to minimize conversion. Product of the salt preparation step can be introduced into a condensation section operated either batchwise or continuously. In the condensation section substantial conversion of salt to polymer takes place. The condensation product then typically is introduced into a finishing section, such as a twin-screw extruder, to obtain further conversion and increase inherent viscosity from a level of about 0.1 to about 0.6 dl/g typically achieved in the condensation section up to about 0.8 dl/g or greater. The polymeric product can be recovered from the finishing section and, for example, pelletized or mixed with fillers, additives and the like.

Commonly assigned U.S. 4,603,193, issued July 29, 1986, and 4,831,108, issued May 16, 1989, both to Richardson et al. and incorporated herein by reference, also disclose preparation of such polyphthalamides by a process particularly suited for high terephthalamide content polyamides. The process of the latter comprises forming an essentially homogeneous mixture of polyamide-forming starting materials, transferring the mixture to a heated preflash zone under pressure, passing the heated, pressurized mixture through an orifice into a zone of lower pressure and high heat flux to form an aerosol mist of reactants, passing the aerosol mist through the zone of high heat flux at short residence time and passing the resulting product to a finishing reactor to increase conversion thereof.

Copolyamides comprising at least about 50 mole percent recurring terephthalamide units together with one or more other types of recurring carbonamide units also can be prepared by blending appropriate homopolyamides or copolyamides in suitable amounts. For example, melt compounding a hexamethylene terephthalamide/hexamethylene isophthalamide copolyamide with nylon 66 can yield a hexamethylene terephthalamide/isophthalamide/adipamide terpolyamide. Melt compounding at temperatures above the melting point of the highest melting component in a suitable extruder is preferably employed in such preparation.

The polyamides preferably have a reduced viscosity of about 0.3 to about 1.4 dl/g as measured in m-cresol at 25°C (0.5 g/100 ml); or of about 0.4 to about 1.9 dl/g as measured in phenol/tetrachloroethane (6:4 by weight), at 25°C (0.5 g/100 ml). When the reduced viscosities as defined above are below about 0.3 or 0.4 dl/g the polyamides are brittle and may yield blends with marginal properties. At high reduced viscosities (above about 1.4 or 1.9 dl/g, vide supra) the polyamides display high melt viscosities and the resulting blends may be difficult to melt-fabricate.

Additive and Fillers

The blends may further include a wide variety of additives to improve or modify various chemical and physical properties. Examples of such additives include flame retardants, stabilizers, rubbery polymers or other impact modifying components, anti-oxidants, melt-processing aids, colorants and fillers and/or reinforcing agents. Representative fibers which may serve as reinforcing media include glass fibers, asbestos, graphitic carbon fibers, amorphous carbon fibers, synthetic polymeric fibers, aluminum fibers, aluminum silicate fibers, oxide of aluminum fibers, titanium fibers, magnesium fibers, rock wool fibers, steel fibers, tungsten fibers, cotton, wool and wood cellulose fibers, etc. Representative filler materials include calcium silicate, silica, clays, talc, mica, carbon black, titanium dioxide, wollastonite, polytetrafluoroethylene, graphite, alumina trihydrate, sodium aluminum carbonate, barium ferrite, etc. The appropriate types and levels of such additives will, of course, depend on processing techniques and on the end use of the resultant product, and can be determined by those skilled in the art. In the case of fiber-reinforced blends according to the invention, fiber levels generally range from about 10 to about 60 weight percent based on weight of the filled compositions, with about 15 to about 50 weight percent being preferred to achieve suitable reinforcement without substantial adverse effects on melt processibility of the compositions. Preferred fibers in such compositions are glass fibers.

The thermoplastic compositions of the present invention may also include one or more additional thermoplastic polymers such as polyarylates, liquid crystalline all-aromatic polyesters, poly(ester-imides), poly(ester-amides), poly(amide-imides), polycarbonates, poly(ester-carbonates), poly(ether imides), polyimides, poly(alkylene phthalates), e.g., poly(ethylene terephthalate), poly(butylene terephthalate), poly-(1,4-cyclohexanedimethanol) terephthalate, and the like); polystyrene, styrene-acrylonitrile copolymers, ABS, and vinyl chloride polymers and copolymers. Suitably, the amount of the additional thermoplastic polymer is in the range of from 0 to about 50 weight percent, based on the total weight of the poly(aryl ether sulfone) and semi-crystalline aliphatic-aromatic polyamide, although greater amounts also may be useful.

In preparing the blends of the present invention, the individual components, which are commonly provided in the form of chips, pellets or powders, can be combined by any suitable techniques. For example, the components can be weighed separately, and then physically mixed together in an appropriate apparatus, e.g., a ball mill. The physical mixture is then dried, preferably under vacuum or in a circulating air oven, although any other suitable apparatus may be used. The purpose of the drying step is to remove water from the physical mixture to prevent degradation. After the mixture of the solid polymer particles (which, optionally, may also contain reinforcing filler, fiber and the like -- vide supra) has been dried, the blend can be prepared. A convenient method of forming the blend is melt extrusion. The extrusion apparatus thoroughly mixes the polymers in the melt and then extrudes the blend in the form of a strand which, upon solidification, can be broken up or cut into chips or pellets. Alternatively, the dry blend may be injection molded.

Those skilled in the art will appreciate that materials of the present invention can be subjected to a wide variety of plastics processing techniques, e.g., injection molding, blow molding, displacement blow molding, thermoforming, melt-spinning, as well as coextrusion processes with other thermoplastic materials. Furthermore, the thermoplastic compositions may be formed into various products, such as sheets, films, fibers, containers and the like.

As further described in the examples, blending of the poly(aryl ether sulfones) with the semi-crystalline aliphatic-aromatic polyamide results in a highly compatible physical blend of the materials. The presently disclosed compositions are physically attractive materials which are visually monolithic, i.e. the materials do not possess macrolaminar characteristics, and show good interphase adhesion.

Furthermore, molded parts formed from the thermoplastic compositions of the present invention exhibit a high level of resistance to organic solvents.

Experimental

The following specific examples are intended for illustrative purposes and should not be construed as a limitation upon the invention.

Examples 1 through 8

A polyamide was prepared from 1,6 hexamethylene diamine and a mixture of terephthalic acid, isophthalic acid and adipic acid (molar ratios 65:25:10); its inherent viscosity (I.V.) was 1.05 dl/g when measured in a 60:40 by weight mixture of phenol and tetrachloroethane at 30 °C and at a concentration of

0.4 grams/100 ml. This polyamide was blended with a poly(aryl ether sulfone) having the structure

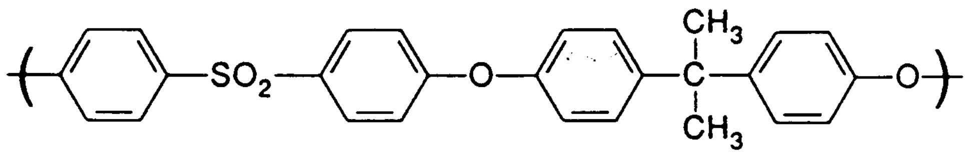

and a reduced viscosity (R.V.) of 0.50 dl/g as measured in chloroform at 25 °C and at a concentration of 0.5 g/100 ml. The blending was carried out in a 25 mm diameter, 38 length to diameter ratio corotating twin screw extruder. The operating conditions are given in Table I.

TABLE I

| Temperature Settings | °C |
|---|---|
| Barrel 1 | 315 |
| Barrel 2 | 345 |
| Barrel 3 | 345 |
| Barrel 4 | 335 |
| Barrel 5 | 305 |
| Barrel 6 | 290 |
| Barrel 7 | 295 |
| Die | 300 |
| Screw Speed | 250-300 revolutions per minute |
| Vacuum on the 6th Barrel | 26-28 inches mercury |

Blends in the ratios indicated in Table II were prepared and molded on a 25 ton 1.8 cubic inch shot volume injection molding machine. The two heating barrels and the nozzle temperatures were set between 300 °C and 315 °C. ASTM type I tensile type specimens obtained on molding were tested for tensile strength according to ASTM D638. The results are given in Table II. The tensile strengths predicted from the law of mixtures using the formula

$$TS_a \cdot W_a + TS_b \cdot W_b = TS_m$$

are also given in Table II. In the formula above, the following definitions apply:

- $TS_a$ • Tensile Strength of the Polyamide
- $TS_b$ • Tensile Strength of the Poly(aryl ether sulfone)
- $W_a$ • Weight Fraction of the Polyamide in the Blend
- $W_b$ • Weight Fraction of the Poly(aryl ether sulfone) in the Blend
- $TS_m$ • Predicted Tensile Strength of the Blend (using the Law of Mixtures)

TABLE II

| Example | Weight Percent Polyamide | Weight Percent Poly(aryl ether sulfone) | Tensile Strength (psi) | Predicted Tensile Strength (psi) |
|---|---|---|---|---|
| 1 | 100 | 0 | 12580 | 12580 |
| 2 | 90 | 10 | 14210 | 12445 |
| 3 | 80 | 20 | 13840 | 12310 |
| 4 | 70 | 30 | 13400 | 12175 |
| 5 | 60 | 40 | 12630 | 12040 |
| 6 | 50 | 50 | 12300 | 11905 |
| 7 | 10 | 90 | 11830 | 11365 |
| 8 | 0 | 100 | 11230 | 11230 |

The data demonstrate that the blends of Examples 2 through 7 exhibit tensile strengths greater than those predicted by the law of mixtures. The polyamide of Examples 1 through 7 contained about 66 percent by weight of hexamethylene terephthalamide units. These results are compared to those obtained on comparative blends in the comparative examples that follow.

Comparative Examples 1 through 5

Blends of a commercial nylon 6,6 resin, identified as Zytel 101 from E. I. du Pont de Nemours Co., Wilmington, Delaware, having an I.V. of 1.21 dl/g, with the poly(aryl ether sulfone) of Examples 2 through 8 were made in the proportions given in Table III. The blends were compounded, injection molded and tested substantially according to procedures used in the foregoing Examples 1 through 8, except that during molding, the temperatures of the molding machine barrel zones and nozzle were set between 270 ° C and 315 ° C. The results are given in Table III.

TABLE III

| Comparative Example | Weight Percent Nylon 6,6 | Weight Percent Poly(aryl ether sulfone) | Tensile Strength (psi) | Predicted Tensile Strength (psi) |
|---|---|---|---|---|
| 1 | 100 | 0 | 12623 | 12623 |
| 2 | 75 | 25 | 10628 | 12189 |
| 3 | 50 | 50 | 7119 | 11755 |
| 4 | 25 | 75 | 11567 | 11320 |
| 5 | 0 | 100 | 10886 | 10886 |

Clearly, blends of nylon 6,6 (which contains no units derived from the reaction of terephthalic acid and 1,6-hexamethylene diamine) and poly(aryl ether sulfones) lack the unpredicted increase in tensile strength exhibited in Examples 2 through 7. In fact, the tensile strengths of the blends are considerably lower than predicted.

Comparative Examples 6 through 10

Blends of a commercial nylon 6 resin, identified as Grilon A28GM from Emser Industries, Inc., Sumter, South Carolina, having an I.V. of 1.14 dl/g, with the poly(aryl ether sulfone) of Examples 2 through 8 were made in the proportions given in Table IV. The blends were compounded, injection molded and tested substantially according to procedures used in Examples 1 through 8 except that during molding the temperatures of the molding machine barrel zones and nozzle were set between 240 ° C and 315 ° C. The results are given in Table IV.

TABLE IV

| Comparative Example | Weight Percent Nylon 6 | Weight Percent Poly(aryl ether sulfone) | Tensile Strength (psi) | Predicted Tensile Strength (psi) |
|---|---|---|---|---|
| 6 | 100 | 0 | 13089 | 13089 |
| 7 | 75 | 25 | 8611 | 12538 |
| 8 | 50 | 50 | 5443 | 11988 |
| 9 | 25 | 75 | 10085 | 11437 |
| 10 | 0 | 100 | 10886 | 10886 |

Clearly, blends of nylon 6 (which does not contain units derived from the reaction of terephthalic acid and 1,6-hexamethylene diamine) and poly(aryl ether sulfones) lack the unpredicted improvements in tensile strength exhibited in Examples 2 through 7. In fact, the tensile strengths of the blends are considerably lower than those predicted by the law of mixtures.

Comparative Examples 11 through 15

Blends of a commercial nylon 12 resin, identified as Grilamid L20G from Emser Industries, Inc., Sumter, South Carolina, having an I.V. of 1.17 dl/g, with the poly(aryl ether sulfone) of Examples 2 through 8 were made in the proportions given in Table V. The blends were compounded, injection molded and tested substantially according to procedures used in Examples 1 through 8 except that during molding the temperatures of the molding machine barrel zones and nozzle were set between 260 ° C and 315 ° C. The results are given in Table V.

| TABLE V | | | | |
|---|---|---|---|---|
| Comparative Example | Weight Percent Nylon 12 | Weight Percent Poly(aryl ether sulfone) | Tensile Strength (psi) | Predicted Tensile Strength (psi) |
| 11 | 100 | 0 | 7086 | 7086 |
| 12 | 75 | 25 | 5799 | 8036 |
| 13 | 50 | 50 | 4792 | 8986 |
| 14 | 25 | 75 | 9704 | 9936 |
| 15 | 0 | 100 | 10886 | 10886 |

The blends of nylon 12 (which does not contain units derived from the reaction product of terephthalic acid and 1,6-hexamethylene diamine) and poly(aryl ether sulfones) lack the unpredicted improvements in tensile strength exhibited in Examples 2 through 7. In fact, the tensile strengths of the blends containing less than 75 percent of the poly(aryl ether sulfone) are considerably lower than those predicted by the law of mixtures.

Comparative Examples 16 through 20

Blends of a commercial poly(2,2,4-trimethylhexamethylene terephthalamide) resin identified as "Trogamid T", from Hüls America, Inc., Piscataway, New Jersey, having an I.V. of 0.99 dl/g, with the poly-(aryl ether sulfone) of Examples 2 through 8 were made in the proportions given in Table VI. The blends were compounded, injection molded and tested substantially according to procedures used in Examples 1 through 8 except that during molding the temperatures of the molding machine barrel zones and nozzle were set between 300 ° C and 320 ° C. The results are given in Table VI.

TABLE VI

| Comparative Example | Weight Percent Trogamid T | Weight Percent Poly(aryl ether sulfone) | Tensile Strength (psi) | Predicted Tensile Strength (psi) |
|---|---|---|---|---|
| 16 | 100 | 0 | 13049 | 13049 |
| 17 | 75 | 25 | 12463 | 12508 |
| 18 | 50 | 50 | 11800 | 11968 |
| 19 | 25 | 75 | 11479 | 11427 |
| 20 | 0 | 100 | 10886 | 10886 |

As can be seen from these comparative examples and the above table, the blends of poly(2,2,4-trimethylhexamethylene terephthalamide) and poly(aryl ether sulfone) exhibit tensile strength close to those predicted by the law of mixtures; however, the unexpected increase in tensile strength demonstrated by the invented blends were not achieved.

Comparative Examples 21 through 25

A polyamide obtained by the reaction of 1,6-hexamethylene diamine with a 40:60 (by wt.) mixture of terephthalic acid and isophthalic acid was blended with the poly(aryl ether sulfone) of Examples 2 through 8. The subject polyamide had less than 50 weight percent of units derived from the reaction of terephthalic acid and 1,6-hexamethylene diamine. The inherent viscosity (I.V.) of the polyamide was 1.01 dl/g. The blends were prepared substantially according to the technique of Examples 1 through 8, except that during molding the temperatures of the molding machine barrel zones and nozzle were set between 300 °C and 330 °C. Results are shown in Table VII.

TABLE VII

| Comparative Example | Weight Percent Polyamide | Weight Percent Poly(aryl ether sulfone) | Tensile Strength (psi) | Predicted Tensile Strength (psi) |
|---|---|---|---|---|
| 21 | 100 | 0 | 14864 | 14864 |
| 22 | 75 | 25 | 13724 | 13870 |
| 23 | 50 | 50 | 12761 | 12875 |
| 24 | 25 | 75 | 11732 | 11881 |
| 25 | 0 | 100 | 10886 | 10886 |

As can be seen, the blends of comparative examples 21 through 25 exhibit tensile strength comparable to those predicted by the law of mixtures; however, the unexpected increases in tensile strength exhibit by the invented blends were not achieved.

Example 9

Weighed quantities of a polyphthalamide prepared from terephthalic acid, isophthalic acid, adipic acid and hexamethylene diamine, in mole fractions of about 65/25/10/105 and a poly(aryl ether sulfone), identified as UDEL® P1700 polysulfone from Amoco Performance Products, Inc., were melt compounded using a 3/4-inch Brabender single screw extruder with a barrel temperature profile of 315 °C/315 °C/315 °C/315 °C and screw speed of 60 rpm. The resulting blend then was injection molded into test bars using an Arburg injection molding machine operated under the following conditions.

| PRESSURES | (PSI) |
|---|---|
| Injection | 350-450 |
| Hold | 250-350 |
| Back | 50-100 |
| **TEMPERATURES** | **°C** |
| Barrel | |
| Rear | 305-315 |
| Front | 320-335 |
| Nozzle | 315-335 |
| Mold | 120 |
| **SPEEDS** | |
| Screw (rpm) | 150-170 |
| Injection Speed Setting | 5 |
| **TIMES** | **SECONDS** |
| Injection | 10 |
| Hold | 10 |
| Total Cycle | 44 |

The test bars were tested for ultimate tensile strength ("UTS") and elongation at break ("EB") following procedures according to ASTM D-638, flexural strength following procedures according to ASTM D-790, flexural modulus ("FLEX MOD") following procedures according to ASTM D-790, notched Izod Impact Strength ("IZOD") following procedures according to ASTM D-256, tensile impact strength ("TIS") following procedures according to ASTM D-1822 and heat distortion temperature at 264 psi ("HDT") following procedures according to ASTM D-648. Results are reported in TABLE VIII.

TABLE VIII

| Polyphthalamide/Poly(aryl ether sulfone) (pbw) | 100/0 | 90/10 | 50/50 | 10/90 | 0/100 |
|---|---|---|---|---|---|
| UTS(kpsi) | 13.5 | 13.0 | 13.3 | 9.1 | 8.4 |
| EB(%) | 5 | 4 | 5 | 12 | 133 |
| FLEX STRENGTH (kpsi) | 22.5 | 23.6 | 20.3 | 17.2 | 15.5 |
| FLEX MOD (kpsi) | 505 | 466 | 439 | 401 | 421 |
| IZOD (ft-lb/inch) | 1.0 | 0.6 | 0.6 | 1.2 | 1.2 |
| TIS (ft-lb/$in^2$) | 77 | 79 | 81 | 129 | 297 |
| HDT(°C) | 120 | 106 | 144 | 162 | 169 |

Example 10

Blends prepared as in Example 9 were tumbled for 1-3 minutes with 3.2mm long chopped glass fibers, identified as PPG 3540 from PPG, in amounts to provide 33 weight percent glass based on weight of the filled compositions. Test specimens were molded and tested substantially as in Example 9. Results are reported in TABLE IX.

TABLE IX

| Polyphthalamide/Poly(aryl ether sulfone) (pbw) | 100/0 | 90/10 | 50/50 | 10/90 | 0/100 |
|---|---|---|---|---|---|
| UTS(kpsi) | 26.9 | 27.1 | 28.1 | 17.2 | 17.8 |
| EB(%) | 5 | 5 | 5 | 3 | 4 |
| FLEX STRENGTH (kpsi) | 44.0 | 48.7 | 36.8 | 25.2 | 23.1 |
| FLEX MOD (kpsi) | 1530 | 1710 | 1600 | 1540 | 1310 |
| IZOD (ft-lb/inch) | 2.9 | 2.6 | 2.1 | 2.0 | 2.1 |
| TIS (ft-lb/in$^2$) | 254 | 210 | 102 | 68 | 69 |
| HDT(°C) | 287 | 287 | 259 | 184 | 183 |

Example 11

Following essentially the procedure of Example 9, blends were prepared using a poly(aryl ether sulfone) identified as VICTREX® 200P from Imperial Chemical Industries, PLC. The blends were molded and tested and results are reported in TABLE X.

TABLE X

| Polyphthalamide/Poly(aryl ether sulfone) (pbw) | 100/0 | 90/0 | 50/50 | 10/90 | 0/100 |
|---|---|---|---|---|---|
| UTS(kpsi) | 13.5 | 12.2 | 11.8 | 11.6 | 8.9 |
| EB(%) | 5.3 | 4.2 | 4.3 | 6.0 | 22.1 |
| FLEX STRENGTH (kpsi) | 22.5 | 22.9 | 21.5 | 19.4 | 20.5 |
| FLEX MOD (kpsi) | 505 | 489 | 478 | 427 | 422 |
| IZOD (ft-lb/inch) | 1.0 | 0.8 | 1.0 | 1.3 | 1.5 |
| TIS (ft-lb/in$^2$) | 77 | 70 | 75 | 150 | 255 |
| HDT(°C) | 120 | 109 | 158 | 191 | 196 |

Example 12

Blends prepared as in Example 11 were tumbled with chopped glass fibers and samples were molded and tested as in Example 10. Results are reported in TABLE XI.

TABLE XI

| Polyphthalamide/Poly(aryl ether sulfone) (pbw) | 100/0 | 90/10 | 50/50 | 10/90 | 0/100 |
|---|---|---|---|---|---|
| UTS(kpsi) | 26.9 | 26.4 | 28.5 | 22.9 | 22.8 |
| EB(%) | 5 | 4 | 5 | 4 | 5 |
| FLEX STRENGTH (kpsi) | 44.0 | 43.1 | 41.7 | 31.8 | 30.0 |
| FLEX MOD (kpsi) | 1530 | 1570 | 1600 | 1630 | 1400 |
| IZOD (ft-lb/inch) | 2.9 | 2.9 | 2.9 | 2.4 | 2.4 |
| TIS (ft-lb/inch$^2$) | 254 | 257 | 248 | 110 | 53 |
| HDT(°C) | 287 | 288 | 262 | 217 | 223 |

Example 13

A series of polyphthalamide/poly(aryl ether sulfone) blends was prepared from components as in Example 11 using a ZSK-30 twin screw extruder operated with a barrel temperature profile of 205°C/238°C/270°C/300°C/315°C/315°C, die temperature of 305°C and screw speed of 50 rpm. Samples were molded and tested as in Example 9 and glass transition temperature ("Tg"), melting point ("Tm"), and degradation temperature ("Td") were determined by differential scanning calorimetry. Retained tensile strength ("RTS") after immersion in methanol at about 65°C for about 24 hours also was determined. Results are reported in TABLE XII.

TABLE XII

| Polyphthalamide/Poly(aryl ether sulfone) (pbw) | 100/0 | 80/20 | 70/30 | 30/70 | 20/80 | 0/100 |
|---|---|---|---|---|---|---|
| UTS(kpsi) | 11.2 | 11.7 | 11.5 | 14.0 | 12.1 | 9.5 |
| RTS(%) | 62.4 | 68.5 | 72.2 | 90.0 | 86.0 | - |
| EB(%) | 3 | 4 | 4 | 8 | 6 | 25 |
| FLEX MOD (kpsi) | 492 | 473 | 468 | 440 | 441 | 425 |
| IZOD (ft-lb/inch) | 1.1 | 0.7 | 0.9 | 1.1 | 1.2 | 1.2 |
| TIS (ft-lb/inch$^2$) | 66 | 65 | 55 | 75 | 89 | 190 |
| HDT(°C) | 124 | 117 | 120 | 190 | 194 | 196 |
| Tg(°C) | 115 | 117 | 116 | 107 | 110 | |
| | | 219 | 221 | 218 | 220 | 220 |
| Tm(°C) | 310 | 316 | 313 | 312 | 311 | - |
| Td(°C) | 380 | 418 | 416 | 428 | 425 | 430 |

Example 14

Two 33 weight percent glass fiber-filled blends of 50 parts by weight of a polyphthalamide having the composition of that used in Example 9 and 50 parts by weight of the poly(aryl ether sulfone) used in Example 9 were prepared by melt compounding weighed amounts of the components using a ZSK-30 twin screw extruder. Sample 1 was prepared using a barrel temperature profile of 118°C/153°C/205°C/315°C/315°C/315°C, die temperature of 315°C, screw speed of 61 rpm and throughput rate of 12 pounds per hour. Sample 2 was prepared using a barrel temperature profile of 149°C/204°C/315°C/315°C/315°C/315°C, die temperatures of 305°C, screw speed of 100 rpm and throughput rate of 18 pounds per hour. Test specimens were molded as in Example 9 at barrel temperatures of 310°C/321°C/321°C and mold temperature of 135°C for Sample 1 and at barrel temperatures of 316°C/327°C/327°C and mold temperature of 93°C for Sample 2. Test specimens were tested as in Example 9 and results appear in Table XIII.

TABLE XIII

| Sample | 1 | 2 |
|---|---|---|
| UTS(kpsi) | 23.7 | 24.6 |
| EB(%) | 3 | 4 |
| FLEX STRENGTH (kpsi) | 34.8 | 31.4 |
| FLEX MOD (kpsi) | 1676 | 1445 |
| IZOD (ft-lb/in) | 1.5 | 1.4 |
| HDT (°C) | 222 | 242 |

**Claims**

**1.** A blend comprising from about 5 to about 95 parts by weight of a poly(aryl ether sulfone) and from about 95 to about 5 parts by weight of a polyamide, wherein the polyamide contains at least 50 percent by weight of recurring 1,6-hexamethylene terephthalamide units, and wherein the poly(aryl ether sulfone) is of the formula

- O - E - O - E'-

wherein E is the residuum of a dihydric phenol, and E' is the residuum of a benzenoid compound having a sulfone group in at least one of the positions ortho and para to the valence bonds, both of said residua being valently bonded to the ether oxygens through aromatic carbon atoms.

**2.** The blend of claim 1 wherein the poly(aryl ether sulfone) comprises repeat units of the formulae

(I)

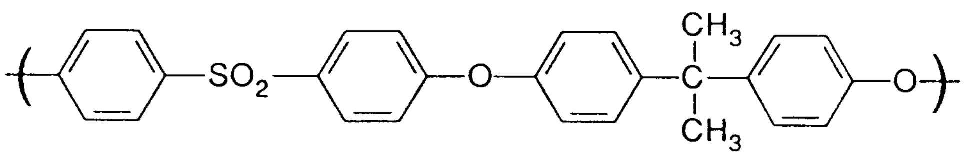

,

(II)

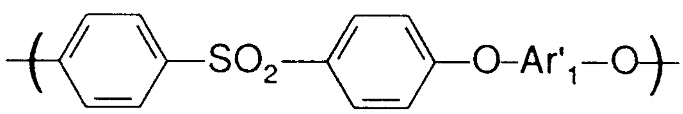

wherein $Ar'_1$ is one or more of

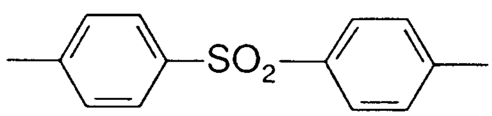

and

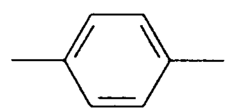

,

(III)

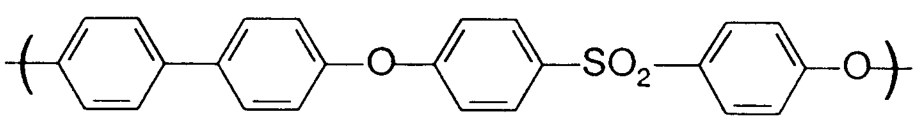

, or

(IV)

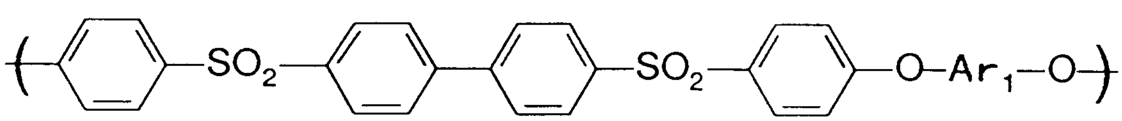

wherein $Ar_1$ is one or more of

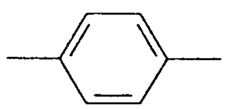 , 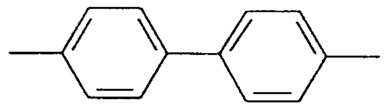

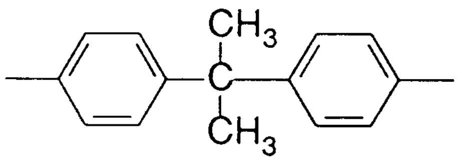 and 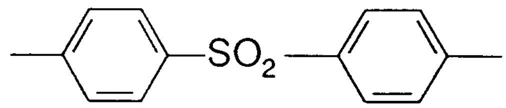 .

3. The blend of claim 1 or claim 2 wherein the polyamide comprises at least 50 percent by weight of recurring 1,6-hexamethylene terephthalamide units and up to 50 percent by weight recurring units of the formulae

(A)

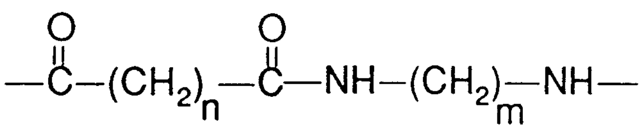

where n is an integer of 4 to 10; and m is an integer of 4 to 12, or

(B)

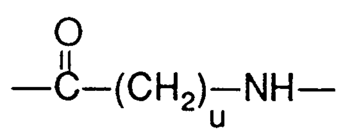

where u is an integer of 3 to 12.

4. The blend of any one of claims 1 to 3 wherein the polyamide comprises recurring units derived from the condensation of terephthalic acid, isophthalic acid and 1,6-hexamethylenediamine.

5. The blend of any one of claims 1 to 3 wherein the polyamide comprises recurring units derived from the condensation of terephthalic acid, isophthalic acid, adipic acid, and 1,6-hexamethylenediamine.

6. The blend of claim 5 wherein the polyamide comprises
   (a) from about 60 to about 85 weight percent recurring 1,6-hexamethylene terephthalamide units;
   (b) from about 0 to about 30 weight percent recurring 1,6-hexamethylene isophthalamide units; and
   (c) from about 10 to about 40 weight percent recurring 1,6-hexamethylene adipamide units.

7. A composition comprising the blend of any one of claims 1 to 6 and at least one particulate or fibrous filler material.

8. A molded object comprising the composition of claim 7.

9. A molded object comprising the blend of any one of claims 1 to 6.

10. A fiber-reinforced object comprising the blend of any one of claims 1 to 6.